# EUROPEAN PATENT SPECIFICATION

(11) **EP 4 301 518 B1**
(45) Date of publication and mention of the grant of the patent: **09.04.2025**
(21) Application number: 22712046.6
(22) Date of filing: 28.02.2022
(51) Int. Cl.: B02C 18/14, B02C 18/18, B02C 19/00, B02C 23/08, B09B 3/00

(54) **SACKS DISPOSAL DEVICE**
VORRICHTUNG ZUR ENTSORGUNG VON SÄCKEN
DISPOSITIF D'ÉLIMINATION DE SACS

(30) Priority: 01.03.2021 IT 202100004700
(43) Date of publication of application: 10.01.2024
(73) Proprietor: C.M.S. S.p.A., 41054 Marano Sul Panaro, Modena (IT)
(72) Inventor: MAGGI, Marco, 41058 Vignola, Province of Modena (IT); SPINUCCI, Marco, 00195 Roma (IT); FONTANA, Gianluca, 41058 Vignola, Province of Modena (IT)
(74) Representative: Mola, Edoardo
(86) International application number: PCT/IB2022/051739
(87) International publication number: WO 2022/185178

(56) References cited:
- US-A- 4 578 185
- US-A1- 2014 209 718
- US-A1- 2020 290 102

## Description

### Field of the invention

The present invention relates to a sacks disposal device. In particular, the present invention relates to a device for disposing of plastic sacks containing liquid capable of separating liquid and solid parts.

### Background art

Machines for disposing of plastic sacks containing liquid, such as sacks with bladder catheters used by patients in hospital departments, are known in the art. The sacks may be made entirely of soft material or partially composed of rigid material such as PVC or nylon several millimetres thick which makes a frame or appendages for supporting or attaching the sack to external structures.

At present, sacks filled with physiological fluids such as urine are handled by operators who, despite wearing gloves, have to empty the urine manually into collection containers, and during this operation they may become soiled by splashes of these physiological fluids.

There are machines on the market for disposing hospital waste, equipped with a shredding unit, but they are large, very expensive and designed to be placed in a single location to serve the entire hospital.

Another problem related to sack disposal machines is to separating liquid and solid parts.

The document DE9113557U1 describes a device equipped with shredding members the material to be disposed of, which is further equipped with a sieve at the outlet of the shredding members and a container arranged below said sieve. As can be seen, the sieve is used to collect the solid parts of the sacks while the physiological liquids end up in the lower container. The document shows embodiment of this inventive concept relating to features of arrangement or operation of the shredder and embodiments of the sieve.

This invention has some limitations in solving the technical problem of disposing of biological material economically, quickly and in both operational and environmental safety. The intervention of an operator is necessary to empty the filter frequently, limiting operations and increasing health risks, and furthermore it can be seen that inside the filter there are still non-negligible quantities of liquid which remain trapped between the shredded parts of the sacks.

In the same field, the document DE3829380A1 describes a device containing inside shredding members followed by a filtering member comprising a filter part operating by centrifugal force and flanked by a mechanism scraping the solid parts deposited inside the truncated cone filter following the centrifugal force applied to the parts of the sacks and a filter part of annular conformation operating by gravity force. Such a solution does not appear to be easy to implement and maintain and, moreover, does not completely solve the problem of the safety of the machine operators, intended as elimination of the risk of contact with potentially infected physiological material.

Document US2020/290102A1 discloses a medical waste treatment system, provided with a waste receiver cover comprising a UV lamp; a waste shredding unit comprising a shredding bin and at least two rotating shredding blades; a compression unit to push the medical waste towards the shredding blades; a separator to allow the passage of shredded medical waste of a predefined shape and diameter; and a disinfectant delivery unit comprising a plurality of nozzles; adisinfection unit which comprises a disinfectant mixing bin and a mixing unit; amain liquid management unit comprising a disinfectant delivery unit that comprises a plurality of nozzles interconnected to the main treatment unit; a separator unit to separate the liquid from shredded waste; and a centrifuge to further remove liquid from the shredded waste.

Also document US4578185A discloses a waste disposal system for treating and disposing of infectious waste articles in a substantially controlled, closed, aseptic environment and for converting such infectious waste articles into a safely disposable, non-infectious non-toxic residue of solid waste independent from disinfecting liquid waste. A waste delivery conveyor transfers waste articles from an input region to preliminary waste processing apparatus for preliminarily fragmenting the waste for further treatment by the system. Disinfectant spray is deposited on the waste as it enters the preliminary waste processing apparatus with the fragments resulting therefrom, together with the disinfectant liquid, being transferred to rotary hammermill elements to convert the fragment disinfectant solution to a solution of fine waste particles and disinfectant solution. Liquid solid particle separator apparatus then separates the solid waste particles from the liquid disinfectant for independent evacuation of same. The system further includes vacuum ventilation elements to maintain any released bacteria or particles within the system until completely processed and disinfected with system switching controls serving to operate and sequence operation of the system components relative to one another by computer.

The applicant for this patent application has therefore identified the need to solve this problem, while guaranteeing the safety of the personnel involved, rapid implementation times and low costs.

### Summary of the invention

The present invention relates to a device for disposing sacks as claimed in claim 1 and comprising a machine for disposing solid plastic sacks containing liquid, for example sacks with bladder catheters or other flexible tubes used in hospital departments, comprising a first hopper suitable for receiving said sacks by gravity force, a shredder placed inside said first hopper comprising at least one shredding unit having a first shaft and a second shaft led by said first shaft, said first and second shafts being provided with a plurality of disks, each of said disks being provided with sharp protuberances configured to break the sacks and discharge the liquid contained therein, and with at least one reed device having a plurality of fixed teeth cooperating with said sharp protuberances of said disks of said first and/or said second counter-rotating shaft, said machine being provided with at least one solid/liquid separator apparatus arranged at the outlet of said shredder, intended to separate solid parts of sacks and sack accessories thereof (e. g. cannulas, hooks/supporting hangers) arranged to receive and process the material previously decomposed by the shredder but still mixed between solid and liquid parts, and provided with a container having a bottom inclined towards a liquid outlet, the liquid outlet comprising a plurality of holes, and a plurality of paddles rotating at a known angular speed and positioned in the container to move the solid waste towards a dedicated outlet opening. In particular, the rotational speed of the paddles is relatively low i.e. not centrifugal to allow separation substantially by gravity.

The invention also provides the conceptual basis for comprising further stages of separation to refine the process and in particular to extract as much liquid as possible from the shredded plastic material comprising the sack.

As will better emerge from the description of a specific embodiment, for a possible solution of the technical problem, the invention provides for having a first and a second solid/liquid separator apparatus for at least part of the residues of said solid and liquid parts exiting said first separator apparatus, that is, two separation stages downstream of the shredder so as to improve the efficiency of extraction of liquids from the solid parts of the shredded sacks, and this is obtained as a consequence of the different filtering characteristics between the first and the second separator stage. One of the inventive concepts underlying the invention is therefore to provide a first separation stage in which most of the liquids initially coming from the full sacks are extracted by gravity action combined with relatively slow mechanical action, followed by a second separation stage by relatively fast mechanical action aimed at extracting the residual part of liquids still adhering between the shredded solid parts.

The invention therefore provides that in at least one separator there is present a plurality of paddles rotating according to a known angular rotation speed, said plurality of paddles moving, when in use, the solid parts of said sacks conveying them towards at least one outlet opening of said separator to dispose at least the solid residues coming from the sacks. Since said separator is placed at the outlet of the shredder, it receives the whole material to be disposed and for this reason it is structured in such a way as to handle relatively high masses and mostly composed of liquid. Consequently, in order to avoid unnecessary and harmful dispersion of liquid particles into the air, the paddles that pick up the solid parts operate at a relatively low speed, preferably of the order of a few revolutions per minute.

In embodiments of the invention, said paddles have a radial arrangement with respect to an axis of rotation and are provided in several specimens, preferably angularly equally distributed, and optionally of mutually different radial lengths. For example, four paddles of equal length can be provided, or eight paddles of which four are relatively longer and four relatively shorter where the arrangement along a circumference involves alternating one long and one short pallet.

Said separator apparatus is provided with a bottom wall comprising a plurality of holes through which at least part of the liquid escaping from the sacks passes by gravity force for disposal. In a preferred embodiment, the bottom of the separator apparatus has a flat conformation and the holes are arranged in such a way that they are overlapped by the passing paddles. This facilitates cleaning of the upper surface of the bottom in the area of the holes, optimising separation operations and reducing maintenance requirements.

The invention provides for a second separating apparatus arranged downstream of the previous apparatus, i.e. the first apparatus, further providing that the second separating apparatus comprises at least one basket inside which is contained a radial impeller, said basket being arranged inside a tank, said tank being provided with at least one opening for discharging liquid parts and at least one opening for discharging by gravity the solid parts resulting from said separation of the solid parts from the liquid parts.

According to the invention, the second purification stage, which is performed by the second purification apparatus and performed on the material coming from the previous stage, treats mostly solid material, having already removed the preponderant liquid component in the previous stage. In this stage, the residual material is further separated into the liquid part by centrifugal force and, advantageously, this is facilitated by the prior reduction of the total masses and the predominantly solid concentration of the material. It is therefore possible to operate at higher speeds, for example in the order of hundreds of revolutions per minute and preferably around 800 revolutions per minute.

In a first variant of this embodiment, the basket remains stationary to the machine body while the impeller makes rotary movements moving the material. In an alternative variant, centrifugation takes place by rotation of the entire basket containing the material to be separated.

The basket is provided with holes of such a size that the solid parts are retained in the basket and the liquid parts are poured into the tank. Advantageously, the basket and/or the impeller are made of or coated with material having non-stick features such as, for example, Teflon.

Preferably, said first and/or second separator are provided with bottom walls substantially arranged in an inclined plane along which the liquid portion leaked or otherwise extracted from said plastic sacks flows. Reflexively, advantageously, the liquid is collected in a predefined area for subsequent conveyance to the discharge area. This can occur thanks to ducts for collecting the liquid part of said sacks, said ducts located in the collection areas and preferably connected to form a single collection circuit for conveying, preferably by the action of gravity, said liquid part towards at least one disposal container or towards a disposal duct external to the machine.

In an embodiment of the invention, which can be realised in combination or sub-combination of other embodiments, the machine further comprises at least one nozzle capable of spraying a sanitising/disinfecting agent inside the machine (M). The sanitising, disinfecting or simply odour-removing action can be automated and carried out in dedicated cleaning cycles or during sack treatment. In the case of sanitising/disinfecting, a specific sanitising or disinfecting solution can be used.

According to other embodiments, the shredder comprises a two shredding units arranged in such a way that the second of said shredding units is interposed between said shredding unit and said first separating apparatus along the path that said solid plastic sacks take inside the machine. Preferably, the first shredding unit will be provided with discs having teeth having a conformation and consistency such as to perform an initial roughing of the whole sacks, while the second unit will be provided with teeth having characteristics such as to further reduce the size of the shredded parts. For example, the discs of the first stage may be about ten millimetres thick, for example 14.5 millimetres, and have four teeth, while the discs of the second stage may be a few millimetres thick, for example 6.0 millimetres, and have 14 teeth.

About the shafts of the shredding unit(s), they are preferably driven by an electric motor by means of a system of pulleys which preferably allow the counter-rotating movement of two parallel shafts and rotating preferably at different angular speeds.

Each shaft cooperates with at least one comb device provided with a first plurality of teeth against which said sharp protuberances of said disks of said first shaft are driven.

In this way, the sacks are opened by means of the plurality of teeth allowing the liquid contained within said sacks to escape.

Furthermore, the presence of the comb device against which said discs of said first shaft are pressed allows further tearing of the sacks.

Thus, the automatic separation of the liquid contained in the sacks from the solid parts which constituted the sack itself and the small plastic tubes connected to the sacks is also obtained.

The separation operation is completely automatic, avoiding the need for it to be carried out manually by the user.

The waste to be disposed of is thus lighter and less bulky.

According to a preferred form of construction, said first and second comb devices are arranged obliquely at an angle of approximately 45° to the vertical. In this way, the slope allows the torn sack parts to descend by gravity towards said first hopper to be further torn by the shredder.

According to a preferred embodiment, said liquid escaping from the sacks is conveyed directly to an external outlet. In another preferred embodiment, said liquid escaping from the sacks is collected in suitable containers.

According to a preferred form of embodiment, said machine further comprises a collection container for collecting by gravity said solid parts transported by said paddles.

According to a preferred embodiment, said sacks are introduced into said compartment by means of an automatically opening round tilting door.

Further features and advantages of the present invention will be better evidenced by examining the following detailed description of a preferred, but not exclusive, embodiment, illustrated by way of indication and not limitation with reference to the accompanying drawings, wherein:
- fig. 1 is a front view of a form of embodiment of a sack disposal machine of the present invention;
- fig. 2 is a rear cutaway view of the machine of fig. 1;
- fig. 3 is a detail seen from above of the first hopper of the machine of fig. 1 and 2;
- fig. 4 is a detail with a side view of the shredder in the first hopper of fig. 3;
- Fig. 5 is a detail of the rotating discs in the shredder of the machine according to the present invention.

### Detailed description

The following detailed description relates to the preferred embodiment of a sack disposal machine M of the present invention.

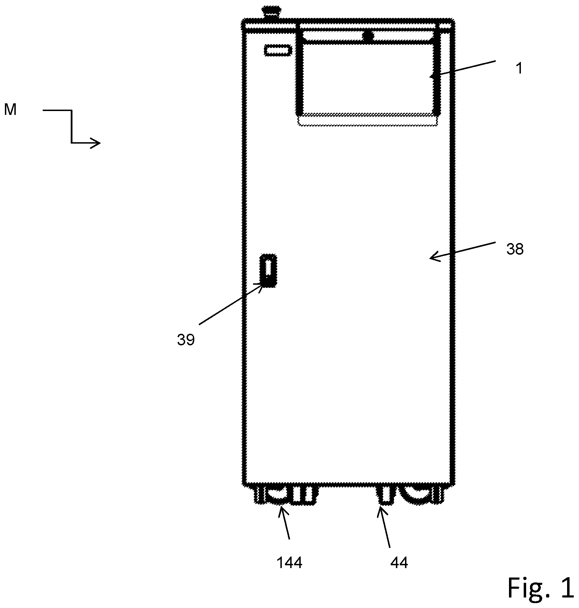

With reference to the drawings, Fig. 1 shows externally the front part of the machine M, which has a substantially parallelepiped shape and which has on one of its vertical walls an automatic tilting door 1 for allowing the insertion of sacks (not shown in the figures) inside the machine M. The sacks are solid sacks, made of plastic material, containing a liquid inside, such as, for example, the sacks with bladder catheters used by patients in hospital departments. They can be entirely made of soft material or be partially composed of rigid material such as PVC or nylon several millimetres thick, which makes a frame or appendages for supporting or attaching the sack to external structures.

The front wall of the machine M has an additional large door 38, provided with a lock 39, and useful for the operator to perform possible maintenance operations on some components placed inside the machine itself.

On the upper part of the machine M there are emergency buttons (not shown in the pictures) for stopping and resetting the machine itself. The electronic components are located in a special compartment 41 in the upper part of the M machine.

The machine M is also provided with two fixed wheels 44 provided with a brake and two pivoting wheels 144 which allow for an easy positioning of the same in the desired hospital area.

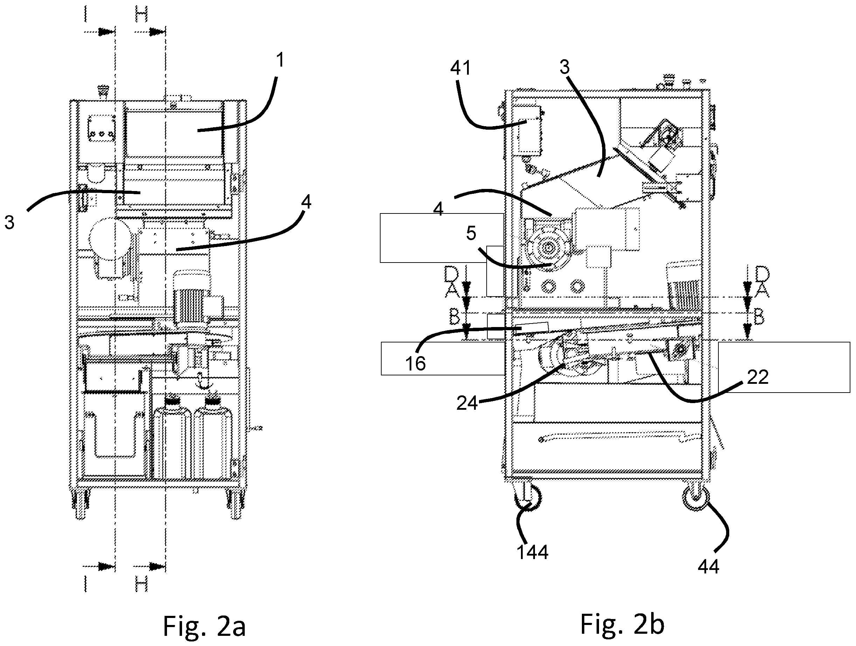

With particular reference to figs. 2a, 2b, respective sections of the machine M are shown according to relative vertical planes perpendicular to each other, in which it is possible to see the compartment 3 capable of housing the sacks full of liquid inserted by means of the automatic opening of the tilting door 1. In the lower part of the compartment 3 there is a first hopper 4 in which the shredder 5 is housed.

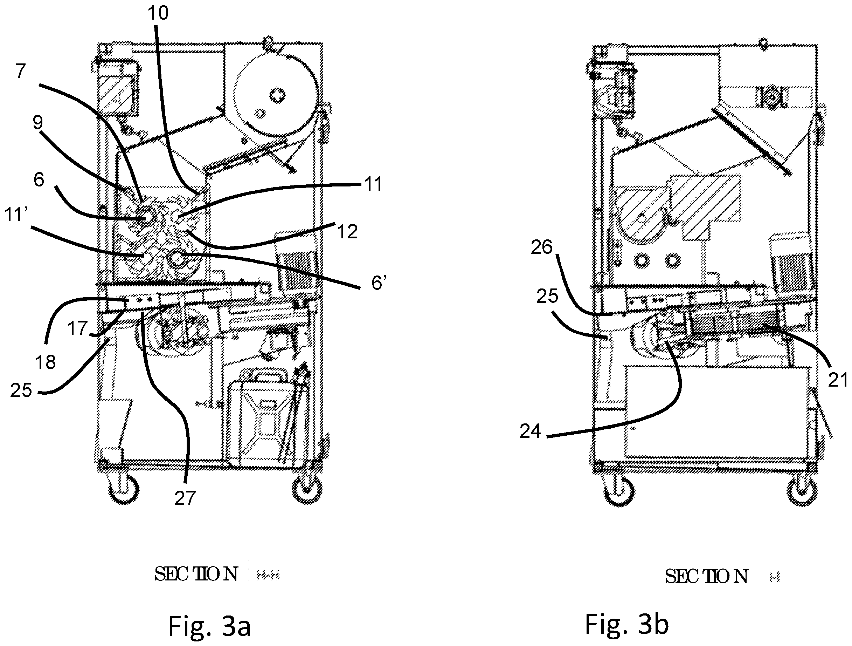

The shredder 5 comprises a first shaft 6 (Figs. 3) having a preferably hexagonal section provided with a first plurality of disks 7, each of them having sharp protuberances for cutting the sacks, and a second driven shaft 11, counter-rotating, and provided with a second plurality of disks 12, each of them having sharp protuberances for cutting the sacks. In the first hopper 4, there are also a first comb device 9 and a second comb device 10 opposed thereto arranged on opposite edges of the first hopper 4, in an oblique position converging at about 45° from the vertical. The first and second comb devices 9 and 10 are provided, respectively, with a first and a second plurality of teeth, spaced apart from each other by a spacing, in which the sharp protuberances of the discs 7, 12 of the first and second shafts 6, 11 are inserted during their rotation.

The shape of the comb devices allows the sharp protuberances of the discs 7, 12 to pass into the corresponding spacing between the teeth of the comb devices. In addition, the shape of the comb devices also allows the sacks to strike against them following the rotation of the shafts 6, 11 and to return by gravity force towards the shafts 6, 11 themselves of the shredder 5.

In this way, the shredder 5 allows the laceration of the sacks by means of the sharp protuberances and their conveyance to the centre of the shredder itself between the two shafts 6, 11 thanks to the convergent downward inclination of the comb devices, with consequent release of the liquid contained therein.

The thickness of the discs 7, 12 can be variable from 5 to 30 mm; for example, the thickness can be 6 mm to obtain a solid waste of a certain size, or it can be 14.5 mm to obtain a solid waste of a more substantial size.

The discs 7, 12 respectively contrast with the comb devices with a maximum cross-sectional clearance of 0.1 mm. The discs 7, 12 also have a clearance between them of about 0.1 mm.

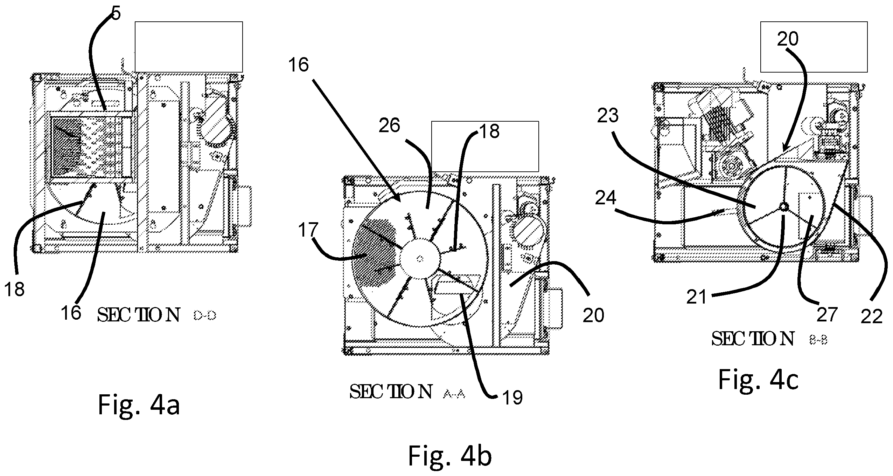

As shown in detail e.g. in fig. 2b, the machine M further comprises a first solid/liquid separation device 16, inclined and arranged at the lower outlet of the shredder 5 to collect the solid waste and the liquid falling from the shredder. The first solid/liquid separation device 16 is provided on its bottom with a plurality of holes i.e. grid 17 (fig. 4b) through which the liquid escaping from the sacks passes, which is sent directly towards a system external to the machine and connectable to it for the treatment of the liquids to be disposed. Alternatively, the liquid can be collected in special containers that are disposed of each time they are filled.

The first solid/liquid separation device 16 is also provided with a plurality of paddles 18 arranged radially within the separator; the paddles 18 are motorised and rotate to push the shredded solid parts of the sacks to be pushed forward over the grid 17 and towards an exit door 19.

Downstream of the first solid/liquid separation device 16, the machine M includes a second solid/liquid separation device 20 operating according to a different mode from that of the first device. In particular, the latter operates substantially by gravity and mixing at low speed of the shredded sacks and the second separation device 20 operates instead at high speed, e.g. by centrifugal acceleration.

According to the embodiment of Fig. 4c, the second separation device 20 comprises a high-speed rotating element 21 which, according to a first embodiment, comprises a basket with perforated walls for evacuating the fluid during rotation; or, according to a further embodiment not illustrated, comprises paddles rotating about a common axis within a fixed basket. In both cases, the rotation speed is considerably higher than that of the paddles 18, in particular by one to two orders of magnitude. The rotating element 21 is located within an enclosure 22 within which the separated fluid is collected and having a bottom wall 23 inclined to direct the fluid towards an outlet duct 24.

The duct 24 converges towards an outlet duct 25 from the first separating device 16, also having an inclined bottom 26 preferably in concordance with the bottom wall 23. Furthermore, the machine M comprises a filter crossed by the total flow rate from the ducts 24, 25 so as to retain solid particles of the sacks before evacuation to the sewer.

According to an embodiment, after centrifugation, the rotation speed of the rotating element 21 is controlled, e.g. by means of an electronic control unit contained in the compartment 41, to remain at a lower value than the centrifugation speed and a trap door 27 of the inclined bottom 23 is automatically opened to dispose by fall of the particles generated by the shredding of the sacks.

The machine M also comprises a series of nozzles that spray a specific sanitizer/disinfectant inside the machine M to keep the machine M itself and its components clean and to eliminate unpleasant odours that are produced by the presence of urine in the sacks to be disposed of.

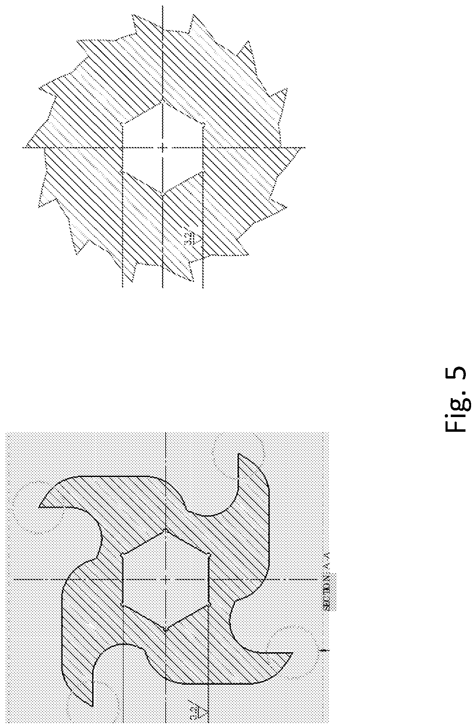

Figure 5 illustrates respective forms of implementation of discs 7, 12 for the shredder 5. According to the form of implementation illustrated in the figures, the shredder 5 comprises a first and a second stage for a total of two pairs of counter-rotating shafts 6, 11 and 6', 11'. Preferably, the modules of the rotational speeds of the shafts of each pair are different in order to standardise the mutual contact wear. Furthermore, between the first and second stages, the frequency with which the protuberances of the discs 7, 12 cross the centre distance of the respective shafts increases. This can be achieved in various ways, for example by increasing the angular speed of the shafts 6', 11' of the second stage by means of a suitable transmission ratio; or by increasing the number of sharp protuberances of the discs 7, 12 of the second stage (figure 5, right) with respect to that of the discs of the first stage (figure 5, left); or a combination of the two.

The machine M comprises a plurality of motors, preferably electric motors, at programmable speeds for each of the rotating units, i.e. shredder 5, first and second separation devices 16, 20. In the case of a two-stage shredder, the motion is transferred to the shafts 6, 11 by means of a synchronous transmission e.g. gears, toothed belts or chains.

The machine M of the present invention therefore allows the liquid part to be separated from the solid part of the sacks and collected in suitable containers for disposal.

Of course, many modifications and variations of the described preferred forms of embodiment will be apparent to persons skilled in the art while still remaining within the scope of the invention.

Therefore, the present invention is not limited to the preferred form of embodiment described, illustrated for illustrative and non-limiting purposes only, but is defined by the following claims.

## Claims

1. Machine (M) for disposing of solid plastic sacks containing liquid, e.g. sacks with bladder catheters or other flexible tubes used in hospital departments, comprising a first hopper (4) suitable for receiving said sacks by gravity force, a shredder (5) placed inside said first hopper (4) comprising at least one shredding unit having a first shaft (6) and a second shaft (11) driven by said first shaft,
said first and second shafts being provided with a plurality of disks (7,12), each of said disks being provided with sharp protuberances set to break said sacks and allowing to spill out the liquid contained therein, and by at least one comb device having a plurality of fixed teeth cooperating with said sharp protuberances of said disks (7,12),
of said first (6) and/or said second driven shaft (11),
said machine (M) comprising at least one solid/liquid separator apparatus (16) for separating solid parts from liquid parts of said plastic sacks coming from said shredder (5), said device comprising a container having a bottom wall (26) inclined towards a liquid outlet, the liquid outlet comprising a plurality of holes (17), and a plurality of rotating paddles (18) having a known angular speed and positioned in the container in order to move the solid waste towards an outlet opening (19),
said machine (M) comprising a further solid/liquid separator apparatus (20) for at least part of the residues of said solid and liquid parts leaving from said at least one separator apparatus (16),
said machine (M) being **characterized in that** said further separator apparatus (20) comprises at least one basket inside which a radial impeller (21) is contained, said basket being arranged inside a tank, said tank being provided with at least one opening for discharge of said liquid parts and at least one opening for discharge by gravity force the said solid parts (27) resulting from said separation of said solid parts from said liquid parts.

2. Machine (M) according to claim 1 wherein said at least one separator apparatus (16) is arranged below said first hopper (4) so as to receive the solid and liquid parts of said sacks, said solid and liquid parts being conveyed inside said separator apparatus by gravity force.

3. Machine (M) according to claim 1 wherein said basket or said radial impeller (21) rotates at a further known angular rotational speed which is greater than the angular speed of the paddles (18) of said at least one separator apparatus (16), said further rotational speed being optionally variable in time.

4. Machine (M) according to claim 3, wherein the maximum value of said further angular rotation speed is chosen to be at least one and preferably two orders of magnitude higher than the value of said angular rotation speed of the paddles (18) of said at least one separator apparatus (16).

5. Machine (M) according to any one of the preceding claims wherein said further separator apparatus (20) is provided with a further bottom wall substantially arranged in an inclined plane along which the liquid portion spilled out or otherwise extracted from said plastic sacks flows.

6. Machine (M) according to any one of the preceding claims, wherein said at least one separator apparatus (16) and/or said further separator apparatus (20) are provided with collection ducts (24, 25) to connect the liquid part of said sacks, said collection ducts preferably connected to form a single collection circuit for conveying, preferably by gravity, said liquid part towards at least one disposal container or towards a disposal duct external to the machine.

7. Machine (M) according to one or more of the preceding claims comprising a first and a second shredding unit, the second shredding unit being arranged below the first shredding unit and, in comparison therewith, operating at a higher frequency with which the disks protuberances cross the wheelbase of the respective shafts.

8. Control method of a machine according to any one of the preceding claims, comprising the steps of driving the further solid/liquid separator apparatus (20) at a lower speed than the separation speed by centrifugation and opening a hatch (27) for evacuation by falling of solid particles generated by the shredding of the sacks.

## Patentansprüche

1. Maschine (M) zum Entsorgen von Festkunststoffbeuteln die Flüssigkeit enthalten, z.B. Beutel mit Blasenkathetern oder anderen biegsamen Schläuchen, die in Krankenhausabteilungen verwendet werden, die einen ersten Trichter (4) umfasst, der die genannte Beutel durch Schwerkraft aufnehmen kann, einen Zerkleinerer (5), der im ersten genannten Trichter (4) angeordnet ist und mindestens eine Zerkleinerungseinheit mit einer ersten Welle (6) und einer von der ersten genannten Welle angetriebenen zweiten Welle (11) umfasst,
wobei die erste und die zweite Welle mit einer Vielzahl von Scheiben (7, 12) versehen sind,
wobei jede der genannten Scheiben mit scharfen Vorsprüngen versehen ist, die dazu bestimmt sind, die Beutel aufzubrechen und das Auslaufen der darin enthaltenen Flüssigkeit zu ermöglichen, und wobei mindestens eine Kammvorrichtung mit einer Vielzahl von festen Zähnen mit den genannten scharfen Vorsprüngen der genannten Scheiben (7, 12) der genannten ersten (6) und/oder der genannten zweiten angetriebenen Welle (11) zusammenwirkt,
wobei die genannte Maschine (M) mindestens eine Fest-/Flüssig-Trennvorrichtung (16) umfasst, um die aus dem genannten Zerkleinerer (5) kommenden Feststoffanteile von den Flüssiganteilen der genannte Kunststoffbeutel zu trennen, wobei die genannte Vorrichtung einen Behälter mit einer zu einem Flüssigkeitsauslass geneigten Bodenwand (26) umfasst, wobei der Flüssigkeitsauslass eine Vielzahl von Löchern (17) und eine Vielzahl sich mit einer bekannten Winkelgeschwindigkeit drehenden Schaufeln (18) umfasst, die in dem Behälter positioniert sind, um die Feststoffabfälle in Richtung einer Auslassöffnung (19) zu bewegen,
wobei die genannte Maschine (M) eine weitere Fest-/Flüssig-Trennvorrichtung (20) für zumindest einen Teil der Rückstände der genannte Feststoff- und Flüssiganteile umfasst, die aus der mindestens einen genannten Trennvorrichtung (16) austreten,
wobei die genannte Maschine (M) **dadurch gekennzeichnet ist, dass** diese weitere genannte Trennvorrichtung (20) mindestens einen Korb umfasst, in dem sich ein Radiallaufrad (21) befindet, wobei der genannte Korb in einem Tank angeordnet ist, wobei der genannte Tank mit mindestens einer Öffnung zum Ablassen der Flüssiganteile und mindestens einer Öffnung zum schwerkraftbedingten Ablassen der Feststoffanteile (27), die aus der genannte Trennung der Feststoff- von den Flüssiganteilen resultieren, versehen ist.

2. Maschine (M) nach Anspruch 1, wobei die genannte mindestens eine Trennvorrichtung (16) unterhalb des genannten ersten Trichters (4) angeordnet ist, um die Feststoff- und Flüssiganteile der genannten Beutel aufzunehmen, wobei die genannte Feststoff- und Flüssiganteile durch Schwerkraft in die genannte Trennvorrichtung befördert werden.

3. Maschine (M) nach Anspruch 1, wobei der genannte Korb oder das genannte Radiallaufrad (21) mit einer weiteren bekannten Winkeldrehgeschwindigkeit rotiert, die größer ist als die Winkelgeschwindigkeit der Schaufeln (18) der mindestens einen genannten Trennvorrichtung (16), wobei die weitere genannte Drehgeschwindigkeit wahlweise zeitlich variabel ist.

4. Maschine (M) nach Anspruch 3, wobei der Maximalwert der weiteren genannten Winkeldrehgeschwindigkeit so gewählt ist, dass er mindestens eine und vorzugsweise zwei Größenordnungen höher ist als der Wert der genannten Winkeldrehgeschwindigkeit der Schaufeln (18) der mindestens einen genannten Trennvorrichtung (16).

5. Maschine (M) nach einem beliebigen der vorhergehenden Ansprüche, wobei die weitere genannte Trennvorrichtung (20) mit einer weiteren Bodenwand versehen ist, die im Wesentlichen in einer geneigten Ebene angeordnet ist und entlang welcher der aus den genannten Kunststoffbeuteln ausgelaufene oder auf andere Weise abgetrennte Flüssigkeitsanteil fließt.

6. Maschine (M) nach einem beliebigen der vorhergehenden Ansprüche, wobei die mindestens eine genannte Trennvorrichtung (16) und/oder die weitere genannte Trennvorrichtung (20) mit Sammelleitungen (24, 25) zum Verbinden des Flüssigkeitsanteils der genannten Beutel versehen sind, wobei die genannten Sammelleitungen vorzugsweise so verbunden sind, dass sie einen einzigen Sammelkreislauf bilden, um den genannten Flüssiganteil vorzugsweise durch Schwerkraft zu mindestens einem Entsorgungsbehälter oder zu einer außerhalb der Maschine befindlichen Entsorgungsleitung zu befördern.

7. Maschine (M) nach einem oder mehreren der vorhergehenden Ansprüche, die eine erste und eine zweite Zerkleinerungseinheit umfasst, wobei die zweite Zerkleinerungseinheit unterhalb der ersten Zerkleinerungseinheit angeordnet ist und im Vergleich dazu mit einer höheren Frequenz arbeitet, mit der die Vorsprünge der Scheiben den Radstand der jeweiligen Wellen kreuzen.

8. Steuerungsverfahren für eine Maschine nach einem der vorhergehenden Ansprüche, welches die Verfahrensschritte des Antreibens der weiteren Fest-/Flüssig-Trennvorrichtung (20) mit einer niedrigeren Geschwindigkeit als der Trenngeschwindigkeit durch Zentrifugieren sowie des Öffnens einer Luke (27) umfasst, um die durch das Zerkleinern der Beutel erzeugten Feststoffpartikel durch Herabfallen abzuführen.

## Revendications

1. Machine (M) d'élimination de sacs en plastique solide contenant un liquide, par exemple des sacs avec des cathéters à vessie ou d'autres tubes flexibles utilisés dans des départements hospitaliers, comprenant une première trémie (4) adaptée à recevoir lesdits sacs sous l'effet de la force de gravité, un broyeur (5) placé à l'intérieur de ladite première trémie (4) comprenant au moins une unité de broyage ayant un premier arbre (6) et un second arbre (11) entraîné par ledit premier arbre,
lesdits premier et second arbres étant pourvus d'une pluralité de disques (7,12), chacun desdits disques étant pourvu de protubérances pointues aptes à rompre lesdits sacs et permettant de drainer le liquide contenu à l'intérieur de ceux-ci,
et par au moins un dispositif de peigne ayant une pluralité de dents fixes coopérant avec lesdites protubérances pointues desdits disques (7,12), dudit premier (6) et/ou dudit second arbre entraîné (11),
ladite machine (M) comprenant au moins un appareil de séparation de solides/liquides (16) pour séparer les parties solides des parties liquides desdits sacs en plastique provenant dudit broyeur (5), ledit dispositif comprenant un conteneur ayant une paroi inférieure (26) inclinée vers une sortie pour liquides, la sortie pour liquides comprenant une pluralité d'orifices (17), et une pluralité de palettes rotatives (18) ayant une vitesse angulaire connue et positionnées dans le conteneur afin de déplacer les déchets solides vers une ouverture de sortie (19),
ladite machine (M) comprenant un autre appareil de séparation de solides/liquides (20) pour au moins une partie des résidus desdites parties solides et liquides sortant dudit au moins un appareil de séparation (16),
ladite machine (M) étant **caractérisée en ce que** ledit autre appareil de séparation (20) comprend au moins un panier à l'intérieur duquel une roue à aubes radiale (21) est logée, ledit panier étant agencé à l'intérieur d'un récipient, ledit récipient étant pourvu d'au moins une ouverture de décharge desdites parties liquides et d'au moins une ouverture de décharge sous l'effet de la force de gravité desdites parties solides (27) résultant de ladite séparation desdites parties solides desdites parties liquides.

2. Machine (M) selon la revendication 1, dans laquelle ledit au moins un appareil de séparation (16) est agencé sous ladite première trémie (4) de manière à recevoir les parties solides et liquides desdits sacs, lesdites parties solides et liquides étant transportées à l'intérieur dudit appareil de séparation sous l'effet de la force de gravité.

3. Machine (M) selon la revendication 1, dans laquelle ledit panier ou ladite roue à aubes radiale (21) tournent à une autre vitesse de rotation angulaire connue qui est supérieure à la vitesse angulaire des palettes (18) dudit au moins un appareil de séparation (16), ladite autre vitesse de rotation étant facultativement variable dans le temps.

4. Machine (M) selon la revendication 3, dans laquelle la valeur maximale de ladite autre vitesse de rotation angulaire est choisie pour qu'elle soit d'au moins un ordre et de préférence d'au moins de deux ordres de grandeur plus élevée par rapport à la valeur de ladite vitesse de rotation angulaire des palettes (18) dudit au moins un appareil de séparation (16).

5. Machine (M) selon l'une quelconque des revendications précédentes, dans laquelle ledit autre appareil de séparation (20) est pourvu d'une autre paroi inférieure sensiblement agencée dans un plan incliné le long duquel la portion liquide drainée ou autrement extraite desdits sacs en plastique s'écoule.

6. Machine (M) selon l'une quelconque des revendications précédentes, dans laquelle ledit au moins un appareil de séparation (16) et/ou ledit autre appareil de séparation (20) sont pourvus de conduits de collecte (24, 25) pour relier la partie liquide desdits sacs, lesdits conduits de collecte étant de préférence reliés pour former un seul circuit de collecte afin de transporter, de préférence sous l'effet de la force de gravité, ladite partie liquide vers au moins un conteneur d'élimination ou vers un conduit d'élimination à l'extérieur de la machine.

7. Machine (M) selon une ou plusieurs des revendications précédentes, comprenant une première et une seconde unités de broyage, la seconde unité de broyage étant agencée sous la première unité de broyage, et par rapport à celle-ci, fonctionnant à une fréquence plus élevée avec laquelle les protubérances des disques traversent l'empattement des arbres respectifs.

8. Procédé de commande d'une machine selon l'une quelconque des revendications précédentes, comprenant les étapes d'entraînement de l'autre appareil de séparation (20) de solides/liquides à une vitesse inférieure par rapport à la vitesse de séparation par centrifugation et d'ouverture d'une trappe (27) d'évacuation en faisant tomber des particules solides générées par le broyage des sacs.
